# DEMANDE DE BREVET EUROPEEN

(11) **EP 1 843 326 A1**
(43) Date de publication de la demande: **10.10.2007**
(21) Numéro de dépôt: 07354020.5
(22) Date de dépôt: 29.03.2007
(51) Int. Cl.: G10L 21/02, H04B 1/38

(54) **Système de communication audio sans fil**

(30) Priorité: 03.04.2006 FR 0602889
(71) Demandeur: ADEUNIS RF, 38920 Crolles (FR)
(72) Inventeur: Saguin, Pascal, 38830 Saint Pierre d'Allevard (FR)
(74) Mandataire: Hecké, Gérard

(57) **Abrégé**

Système autonome de communication audio sans fils multi-utilisateurs, et sans hiérarchie dans les échanges, chaque utilisateur étant muni d'un équipement de transmission numérique (19) comportant un processeur (DSP) de traitement numérique à multiplexage temporel apte à piloter un module de transmission radio (ARF) à émetteur-récepteur associé à une antenne (17) d'émission et de réception. Des premiers moyens de traitement temporel comportent un filtre de bruit (20) numérique coopérant avec des deuxièmes moyens d'analyse spectrale pour réaliser un filtrage dynamique apte à extraire la parole du bruit ou de l'ambiance sonore. La fonction de maître est affectée sans hiérarchie à l'un des équipements (19) des utilisateurs (A1, A2,.....), les autres devenant esclaves de manière à constituer un réseau de communication portable et fiable.

## Description

### Domaine technique de l'invention

L'invention concerne un système autonome de communication audio sans fils multi-utilisateurs, chaque utilisateur étant muni d'un équipement de transmission numérique comportant :
- un microphone relié à des moyens d'amplification et de filtrage du signal audio capté, lequel est ensuite numérisé dans un convertisseur analogique digital ou codeur-décodeur,
- un processeur de traitement numérique à multiplexage temporel apte à piloter un module de transmission radio à émetteur-récepteur associé à une antenne d'émission et de réception,
- des moyens de traitement temporel d'un premier circuit doté d'un filtre de bruit numérique et d'un vocodeur pour transformer le signal audio numérique issu du convertisseur en un signal de sortie de commande du module de transmission radio,
- et un circuit décodeur interconnecté entre le module de transmission radio et un haut-parleur,
l'ensemble des équipements étant couplés entre eux en communication permanente par liaison radio en constituant une conférence téléphonique où tous les utilisateurs peuvent parler entre eux et où chacun entend les échanges des autres.

L'équipement mis en oeuvre dans le système permet des communications audio de type « Conférence » entre plusieurs utilisateurs, sans aucune hiérarchie dans les échanges. Lors d'une conversation « de visu », tout le monde communique avec tout le monde, sans nécessiter de commande spéciale de l'appareil, par exemple par actionnement d'un bouton poussoir classiquement employé dans les talkie walkies à radiofréquence.

L'équipement s'approche beaucoup des téléphones sans fil, à ceci près que la communication directe (en radio) n'est pas limitée à seulement deux interlocuteurs. Le système est constitué par des éléments de communication mobiles non raccordés à une quelconque base, afin d'assurer la plus parfaite autonomie aux utilisateurs.

De fait, l'équipement est en communication permanente, ce qui suppose une gestion particulière de la détection et de la transmission de la parole. En effet, le champ d'application de la présente invention concerne tous les contextes et, notamment, ceux où l'environnement extérieur est bruyant et où il peut constituer une gêne à l'établissement de communications audio. On peut citer à titre d'exemple, les représentations sportives publiques, les chantiers de constructions, le monde industriel (contrôle de machines), certaines applications militaires, la sécurité lors de manifestations culturelles ou autres.

### État de la technique

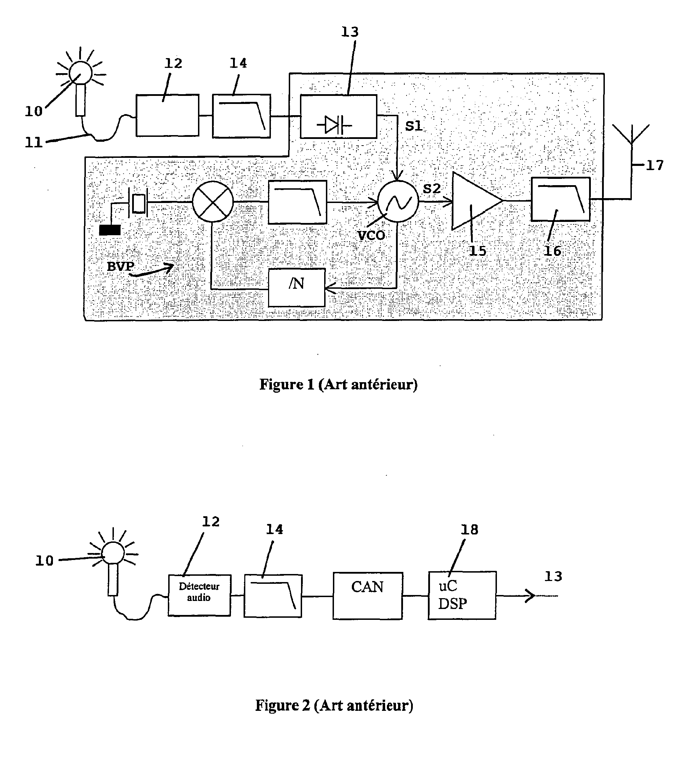

Les systèmes de transmission analogiques (Talkie-walkie...) connus du commerce transmettent la voix selon le principe présenté au schéma de la figure 1. Dans le circuit émetteur, la voix captée par un microphone 10 est orientée par une liaison 11 vers un détecteur audio 12 ayant une double fonction :
- d'une part il bloque le passage de sons, bruits en dessous d'un certain seuil (la plupart du temps réglable par l'utilisateur du produit).
- d'autre part, et si le niveau audio est suffisant, il assure une fonction d'amplification, voir de limitation, avant d'attaquer un circuit modulateur 13 à travers un premier filtre 14.

La génération de l'onde porteuse peut se faire par exemple au moyen d'une boucle à verrouillage de phase BVP, le signal audio S1 modulant alors librement un oscillateur VCO commandé en tension.
En général, le signal S2 issu de l'oscillateur VCO est alors amplifié dans un amplificateur 15, puis filtré dans un deuxième filtre 16 de manière à atteindre le niveau désiré et rentrer dans les gabarits normatifs. L'antenne 17 fait office de transducteur pour convertir l'énergie électrique en énergie électromagnétique nécessaire à la propagation.
Le récepteur utilise un principe de démodulation tout aussi classique. Il n'est pas détaillé ici car très loin de l'objet du brevet.

La figure 2 illustre un autre moyen connu pour les communications audio à transmission numérique, du type téléphonie DECT. La différence majeure avec le circuit analogique de la figure 1 est le traitement du signal audio. Au départ, le signal audio issu du microphone 10, est traité de la même manière que pour la transmission analogique, c'est à dire après passage dans le détecteur audio 12 et le filtre 14. Seulement avant d'attaquer le circuit modulateur 13, le signal est numérisé par le biais d'un convertisseur analogique numérique CAN, faisant souvent partie intégrante d'un codeur-décodeur CODEC intégrant quelques fonctionnalités supplémentaires, notamment d'amplification Le signal issu du convertisseur CAN est ensuite injecté dans un circuit de traitement numérique 18 à microprocesseur ou processeur DSP, pour pouvoir être analysé et éventuellement compressé avant d'attaquer le circuit modulateur 13 de la figure 1.

La compression du signal (possible par l'utilisation d'un vocodeur type GSM ou équivalent) permet de réaliser du multiplexage temporel et d'obtenir des conversations type « conférence téléphonique » sur un seul canal de transmission. Le procédé de numérisation/compression induit néanmoins une perte sensible de la qualité du signal sonore.

L'ensemble de ces systèmes connus, du talkie-walkie au téléphone DECT offre de très bonnes performances dans un environnement calme ou peu bruité. Par contre, l'utilisation de ce type d'appareil dans une ambiance fortement bruitée (par exemple, un stade de football ou de rugby avec plus de 50000 personnes) est quasiment impossible ou du moins n'offre pas satisfaction.

En effet, il n'existe pas de niveau de déclenchement du détecteur audio assurant une distinction de la voix de l'utilisateur par rapport aux bruits environnants (foule, machines, sifflets...). Dans nombres de contextes, l'ambiance est tellement forte que les bruits environnants peuvent arriver au même niveau sonore que la voix de l'utilisateur sur l'entrée du microphone.

En conséquence :
- Ou le seuil de déclenchement du détecteur audio est réglé trop haut et une pluralité de paroles de l'utilisateur sont coupées.
- Ou il est réglé trop bas et les voix des utilisateurs sont en permanence couvertes par les bruits environnants, et le système se déclenche intempestivement sur les bruits extérieurs occasionnant des gênes importantes dans l'écoute des autre utilisateurs appartenant au système de communication.

Un palliatif serait l'insertion d'un bouton poussoir destiné à assurer une fonction de prise de ligne appelée « Push to talk » entre le microphone et l'électronique audio. L'inconvénient de cette solution est qu'elle est contraignante et peu adaptée à nombre de domaines d'application (milieu sportif, militaire, services d'urgence...). A titre d'exemple, la fonction d'arbitrage sportif de haut niveau demande une telle concentration qu'il n'est pas envisageable de demander aux arbitres d'appuyer sur un bouton pour parler.

Le document US 2005/0213727 décrit un système de communication audio sans fils multi-utilisateurs conforme au préambule de la revendication 1. L'ensemble des appareils des utilisateurs est piloté par un module de contrôle servant de base. En cas de défaut de ce module, les communications entre utilisateurs ne sont plus possibles.

### Objet de l'invention

L'objet de la présente invention consiste à réaliser un système de communication numérique multi-utilisateurs à multiplexage temporel, améliorant la distinction des voix des utilisateurs par rapport aux bruits environnants, tout en garantissant une fiabilité de transmission sans hiérarchie dans les échanges entre utilisateurs.

Selon l'invention, ce but est atteint par le fait que le processeur de chaque équipement de communication comporte :
- des moyens d'analyse spectrale d'un deuxième circuit coopérant avec le filtre de bruit pour réaliser un filtrage dynamique pour extraire la parole émise par un utilisateur du bruit ou de l'ambiance sonore,
- et des moyens de synchronisation et de gestion des émissions pour assurer une fonction de maître à l'un des équipements, les autres devenant esclaves sans hiérarchie dans les échanges.

Il en résulte à la fois :
- une bonne qualité des échanges entre les différents utilisateurs, tout en conservant une très bonne immunité à l'environnement sonore extérieur (bruits de foules, machines, sifflets...),
- un réseau de communication mobile entre les équipements des utilisateurs, qui ne nécessite pas de base, et qui est fiable étant donné que si l'équipement maître disparaît, un autre équipement prend le relais sans interrompre la communication.

Préférentiellement, les moyens d'analyse spectrale comportent un circuit analyseur de fréquence, par exemple un analyseur de transformation Fourier, en liaison avec un circuit d'extraction des paramètres du filtre de bruits numérique. Le vocodeur en sortie du filtre de bruits numérique est en liaison avec un circuit d'encapsulation apte à délivrer après compression et/ou cryptage le signal de sortie sous forme de trames. Les moyens de synchronisation et de gestion des émissions sont élaborées dans le circuit d'encapsulation

L'effet de filtrage dynamique mise en oeuvre dans le processeur permet de détecter le meilleur filtrage à appliquer, afin d'extraire la parole de l'ambiance sonore selon le processus suivant :
- analyse spectrale du signal audio numérisé avec détection de phénomènes vocaux,
- extraction des caractéristiques spectrales du bruit d'ambiance,
- conversion spectrale/temporelle de l'ambiance,
- soustraction temporelle de l'ambiance à l'audio,
- encodage et/ou encryptage du signal audio filtré pour délivrer le signal de sortie adapté à la transmission.

Chaque équipement possède un premier état d'établissement de communication, dans lequel l'ensemble des équipements des utilisateurs ne sont pas synchronisés lors de l'inhibition des communications, et un deuxième état de communication établie, dans lequel un des équipements assure et maintien la synchronisation de tous les autres équipements du système pour autoriser la conférence téléphonique entre les utilisateurs.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 montre un circuit de communication audio de l'art antérieur à transmission analogique du type Talkie Walkie ;
- la figure 2 représente un autre circuit de communication audio de l'art antérieur à transmission numérique du type téléphonie DECT ;
- la figure 3 illustre un schéma bloc du système de communication multi-utilisateurs à transmission numérique selon l'invention ;
- la figure 4 représente le synoptique détaillé du filtrage dynamique utilisé dans le circuit de la figure 3 ;
- la figure 5 illustre le diagramme simplifié à deux états mis en oeuvre dans chaque équipement ;
- la figure 6 montre à titre d'exemple l'organigramme du protocole d'échange d'une machine à état Ai ;
- la figure 7 représente un réseau audio portable sans fil à cinq utilisateurs.

### Description d'un mode préférentiel de réalisation

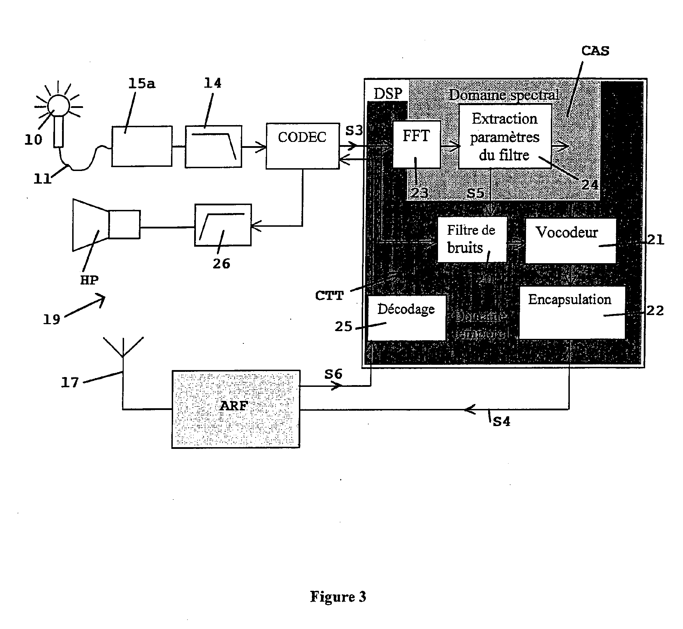

La figure 3 concerne un équipement de communication 19 audio utilisé par chaque utilisateur pour constituer un système de communication numérique de type conférence téléphonique : tout le monde peut parler à tout le monde et chacun entend tout le monde. Pour cela, on utilisera une technologie de transmission numérique par multiplexage temporel qui suppose une numérisation et une compression de la voie.

L'objectif est d'avoir un système de communication audio à mains libres à plusieurs intervenants pour répondre aux différents clients susceptibles d'être intéressés par notre système (milieux sportifs, militaires, génie civil...).

De plus, le système de communication est capable de filtrer les bruits environnants (cris, sifflets, moteurs, machines...), par détermination des critères différenciateurs entre la voix humaine et les autres sons possibles dans l'environnement applicatif (un stade de 50000 personnes par exemple) et, ensuite, par création du filtre correspondant, en limitant au maximum l'impact sur la qualité audio.

Les échanges sont cryptés pour donner de la confidentialité aux communications. De fait, au sein d'un système, l'ensemble des appareils ou équipements devra être appairé. Cet appairage sera réalisé au moyen d'une clef échangée entre les produits et modifiable à volonté.

Le dernier point important est la facilité d'utilisation du système. Les utilisateurs sont autonomes, aucun technicien ne doit les assister pour la mise en oeuvre du système, élément obligatoire pour le développement commercial du produit.

L'idée inventive dans le système de communication numérique est de combiner dans chaque équipement 19 une analyse spectrale et temporelle du signal pour répondre aux exigences de qualité de la voix et de filtrage de l'ambiance.

Côté filtrage, il est impossible de distinguer la voix de l'utilisateur de son environnement sonore par le biais d'une simple analyse temporelle (ambiance très bruitée). Par contre, l'analyse spectrale du signal permet de faire cette distinction.

A contrario, une application directe du filtrage fréquentiel sur l'audio avant retour dans le domaine temporel serait l'origine d'une dégradation qualité de la voix, par trop forte réduction de la bande passante audio.

Sur la figure 3, le signal issu du microphone 10 de chaque équipement 19 est amplifié par un amplificateur 15a, filtré dans le premier filtre 14 et envoyé dans le convertisseur analogique numérique CAN ou codeur-décodeur CODEC. A la sortie de ce dernier, le signal numérique S3 est orienté vers un processeur numérique DSP renfermant des moyens des moyens de traitement temporel agencés dans un premier circuit de traitement temporel CTT, et des moyens d'analyse spectrale agencés dans un deuxième circuit d'analyse spectrale CAS.

Le premier circuit de traitement temporel CTT comprend un filtre de bruits 20 relié à un vocodeur 21 et à un circuit d'encapsulation 22, lequel délivre après éventuel compression et/ou cryptage, un signal de sortie S4 sous forme de trames compatibles, lequel est appliqué à un module de transmission radio ARF relié à l'antenne 17 d'émission et de réception.

Le deuxième circuit d'analyse spectrale CAS est composé d'un circuit analyseur de Fourier 23 connecté à un circuit d'extraction 24 des paramètres du filtre, de manière à pouvoir engendrer un signal pilote S5 pour la commande du filtre de bruits 20 numérique.

Le module de transmission radio ARF est formé par un circuit émetteur-récepteur, autorisant une réception multi-usage par l'antenne 17. A la réception, le module de transmission radio ARF communique par le signal S6 avec un circuit décodeur 25 relié au codeur-décodeur CODEC. Une sortie de ce dernier est en liaison avec un haut-parleur HP avec interposition d'un troisième filtre 26.

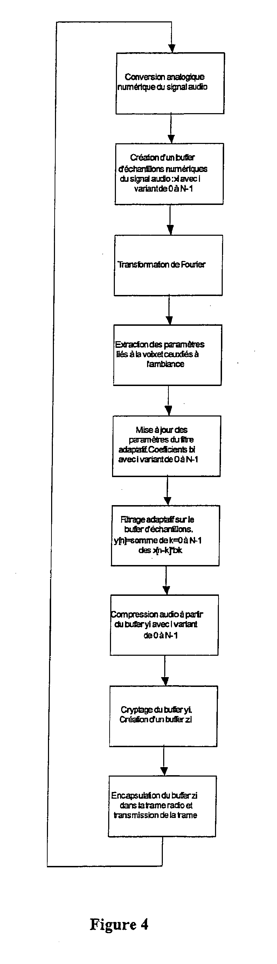

La solution de filtrage dynamique mise en oeuvre dans le processeur DSP permet de détecter le meilleur filtrage à appliquer, afin d'extraire la parole de l'ambiance sonore (variable d'un milieu à l'autre), selon le processus représentant sous forme de synoptique dans la figure 4.

Les étapes suivantes interviennent successivement lors de ce filtrage dynamique :
1. La première étape est l'analyse spectrale de l'audio avec détection de phénonèmes vocaux. La conversion analogique numérique dans le CODEC avec création d'un registre tampon d'échantillons numériques du signal audio numérique, est suivie par une transformation de Fourier dans le circuit analyseur 23 du deuxième circuit CAS.
2. La deuxième étape est réalisée dans le circuit 24 pour l'extraction des caractéristiques spectrales du bruit d'ambiance.
3. La troisième étape concerne la conversion spectrale / temporelle de l'ambiance dans le filtre de bruit 20 numérique.
4. La quatrième étape effectue la soustraction temporelle de l'ambiance à l'audio. Il en résulte un filtrage adaptatif agissant sur le registre tampon d'échantillons.
5. La dernière étape est l'encodage et l'encryptage audio « nettoyée » pour délivrer le signal S4 au module de transmission ARF radio. A partir d'une compression audio à partir d'un registre tampon d'échantillons yi avec i variant de 0 à N-1, on effectue un cryptage de ce registre yi, pour créer un registre tampon zi. On termine par l'encapsulation du registre tampon zi dans la trame radio du signal s4 envoyée au module de transmission ARF radio.

La mise en oeuvre de ce processus permet de combiner une analyse spectrale du signal numérique audio pour satisfaire aux exigences de qualité de la voix et de filtrage de l'ambiance.

Des essais ont permis de mettre en évidence une amélioration significative offerte par une telle architecture. Il en résulte une bonne qualité des échanges (pas de sensation de voix synthétisée, exploitation directe des échantillons) tout en conservant une très bonne immunité à l'environnement sonore extérieur (bruits de foules, machines, sifflets...).

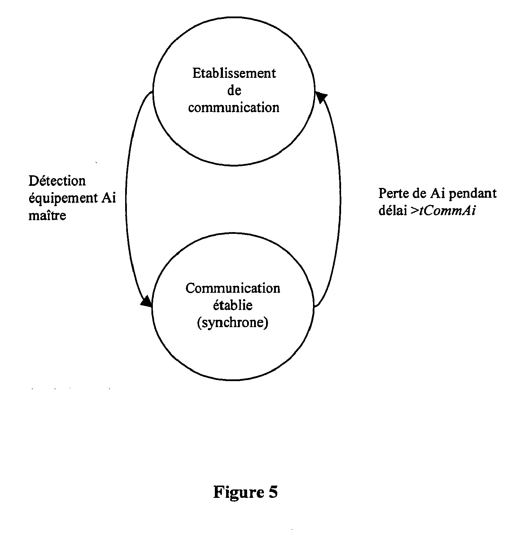

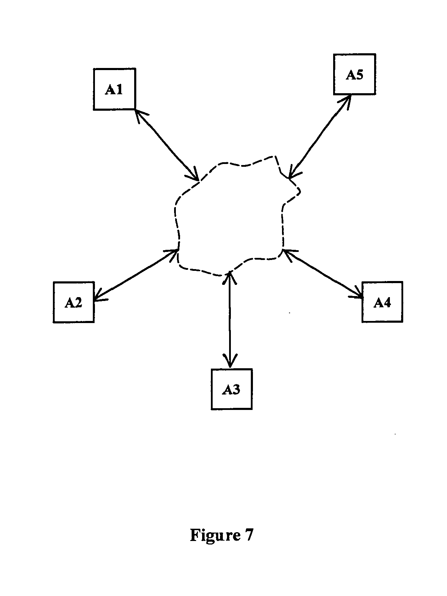

En référence aux figures 5 à 7, le processus de communication audio de type « Conférence » est basé sur un principe de partage du temps entre les différents utilisateurs (A1 à A5) munis chacun d'un équipement (19). Quand l'équipement de l'utilisateur A1 est en émission, il est écouté par les 4 autres, puis écoute successivement l'équipement de l'utilisateur A2, puis A3 puis A4 et A5. Le multiplexage temporel induit une notion de synchronisation des émissions pour éviter les collisions. Cela est réalisé par un des équipements du système (n'importe lequel) qui assure une fonction de « maître », les autres devenant ses esclaves en se synchronisant sur lui pour émettre. N'importe quel équipement des utilisateurs A1 à A5 peut jouer le rôle de maître, évitant ainsi la nécessité d'une base, d'où un avantage important de portabilité. Dans la figure 7, si l'équipement de l'utilisateur A2 initialement maître disparaît (extinction, batterie faible, hors de portée...), l'un des 4 autres équipements de A1, A3, A4, ou A5 deviendra le maître et assurera la synchronisation.

Le processus de synchronisation et de gestion des communications de chaque équipement de A1 à A5 est élaboré dans le circuit d'encapsulation 22 de la figure 3, basé sur le principe des machines à état. Les états de chacune des machines des différents équipements sont identiques, seules les conditions de transitions diffèrent. A titre d'exemple, le nombre d'appels réalisés par l'équipement de A1 et l'équipement de A5 sont différents.

Sur la figure 5, deux états sont utilisés dans le système de communication :
- un premier état d'établissement de communication, dans lequel l'ensemble des équipements 19 ne sont pas synchronisés. Les communications audio ne sont pas possibles. Dans ce premier état, l'objectif premier est d'obtenir la synchronisation des équipements.
- un deuxième état de communication établie, dans lequel un équipement assure et maintien la synchronisation de tous les autres équipements du système. Les communications audio sont possibles. Une perte temporaire (inférieure à un seuil tCommAi de l'équipement assurant la synchronisation, ne provoque pas une perte de synchronisation des autres équipements. Par contre si la perte temporaire de l'équipement assurant la synchronisation est trop longue (supérieure au seuil), un autre équipement prendra le relais, avec un passage dans le premier état d'établissement de communication.

Pour permettre un établissement de communication entre au moins 2 équipements, indépendamment du numéro d'équipements des utilisateurs A1 à A5, et indépendamment du nombre d'équipements présents dans les phases d'appel, une gestion de collision de type CSMA / CD est utilisée. Avant chaque appel, l'équipement appelant vérifie la présence ou non d'une porteuse.

Idéalement lorsqu'une communication est établie, un seul équipement est à l'initiative de la synchronisation des équipements. Suivant la configuration, il est possible d'avoir à un instant T, plusieurs équipements à l'initiative de la synchronisation des systèmes ; cette phase doit être transitoire afin d'éviter les perturbations possibles entre deux sous systèmes. Ces problèmes temporaires sont résolus en introduisant une notion de priorité pour les équipements ainsi qu'en modulant le délai de maintien de synchronisation du seuil tCommAi, en fonction du maître actif.

Les équipements des utilisateurs possèdent des degrés de priorité différents et décroissants, l'équipement Ai possède une priorité supérieure à l'équipement Ai+n (n≥ 1). Par exemple si à un instant T, A1 et A5 sont simultanément maîtres de la communication, A5 passera en mode esclave dès la détection d'une trame indiquant que A1 est maître.

Les paramètres influençant les machines à état sont les suivants :
- Le numéro d'équipement A1 à A5 : quand l'un est maître, les autres sont esclaves.
- L'équipement maître ou esclave : la machine d'état établit un protocole d'échange pour savoir qui est maître parmi les équipements présents. Une fois les positions établies, chaque équipement indique son état dans la trame d'émission radio.
- Les délais : par exemple du seuil de maintien de synchronisation, qui est fonction du maître courant. Le délai d'attente de veille dépend du numéro de l'équipement. Dans les représentations de la machine à état, les délais sont évalués par rapport à une variable notée CptEtat. Cette variable est une base de temps à 30ms, laquelle est systématiquement mise à 0 dans l'entrée d'un état, remise à 0 de façon conditionnelle dans l'état et incrémentée toutes les 30ms. La durée de 30ms est donnée à titre indicative, pour permettre de simplifier les écritures et représentation.
- La réception de trame radio, d'aucune trame radio, ou la réception d'aucun maître :
   > Les trames radio sont cryptées, par une clé définie de manière pseudo aléatoire par l'équipement A1 dans une phase de configuration du système.
   >Elles possèdent un mot de synchronisation propre à l'équipement appelant
   > Elles contiennent une information indiquant l'état du produit. Par convention, ces états seront notés comme suit :
      Ai : équipement Ai seul, ni maître ni esclave (ex : ⇒ A1)
      Aii : équipement Ai en communication avec équipement Ai pour maitre (ex : ⇒ A11, trame en provenance de A1 qui a pour maitre A1)
      Aij : équipement Ai en communication avec équipement Aj pour maitre (ex : ⇒ A21, trame en provenance de A2 qui a pour maître A1).

Les différents états des machines à état indiquent le type de communication en cours.
- Appel : Pour connaître l'environnement, les équipements de A1 à Ai appellent brièvement, de manière asynchrone, les autres équipements pour initier une communication. Si une communication n'est pas initiée suite aux appels, le dispositif se retourne en veille pour capter l'appel d'un autre maître / équipement complémentaire.
- Veille : La veille permet d'écouter l'équipement complémentaire appelant ou en cours de communication. Exemple si A1 en veille reçoit A2 appel, A1 devient esclave et A2 maître. Inversement pour A2 qui reçoit A1. C'est le premier dispositif qui émet qui se retrouve maître.
- Communication Ai maître : tous les dispositifs autres que Ai se synchronisent sur Ai. La perte de Aii pendant une durée supérieure au délai de maintien de synchronisation tCommAi, fait repasser l'état de l'équipement en veille. La réception d'une trame Ajj, avec j de priorité supérieure à i, fait passer l'équipement Ai en communication esclave avec Ajj comme maître.
- Communication Ai esclave : Communication de Ai se synchronisant sur un maître Am. La perte de Amm pendant une durée supérieure au seuil tCommAm, fait repasser l'état de l'équipement en veille. La réception d'une trame Ajj, avec j de priorité supérieure à m, fait passer l'équipement Ai en communication esclave avec Ajj comme maître.

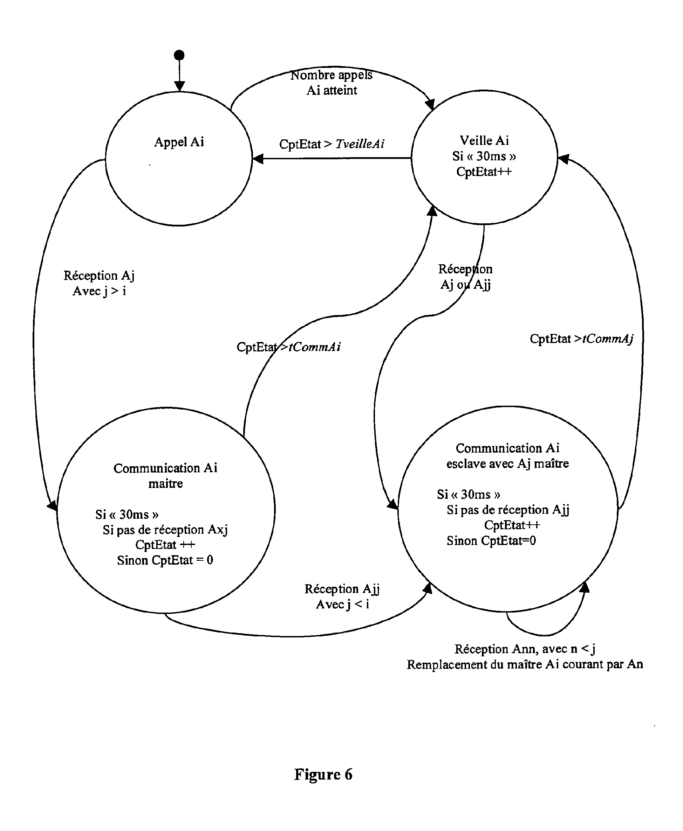

La figure 6 montre à titre d'exemple l'organigramme du protocole d'échange d'une machine à état Ai.

Le filtrage dynamique associé au processus de communication maître-esclave sans hiérarchie dans les échanges, permet d'obtenir un réseau R mobile portable de communication numérique multi-utilisateurs, ne nécessitant pas de base, et ayant une excellente fiabilité de transmission et une très bonne immunité à l'environnement sonore extérieur.

## Revendications

1. Système autonome de communication audio sans fils multi-utilisateurs, chaque utilisateur étant muni d'un équipement de transmission numérique (19) comportant :
- un microphone (10) relié à des moyens d'amplification et de filtrage (15a, 14) du signal audio capté, lequel est ensuite numérisé dans un convertisseur analogique digital (CAN) ou codeur-décodeur (CODEC),
- un processeur (DSP) de traitement numérique à multiplexage temporel apte à piloter un module de transmission radio (ARF) à émetteur-récepteur associé à une antenne (17) d'émission et de réception,
- des moyens de traitement temporel d'un premier circuit (CTT) doté d'un filtre de bruit (20) numérique et d'un vocodeur (21) pour transformer le signal audio numérique (S3) issu du convertisseur (CAN) en un signal de sortie (S4) de commande du module de transmission radio (ARF),
- un circuit décodeur (25) interconnecté entre le module de transmission radio (ARF) et un haut-parleur (HP),
- l'ensemble des équipements (19) étant couplés entre eux en communication permanente par liaison radio en constituant une conférence téléphonique où tous les utilisateurs peuvent parler entre eux et où chacun entend les échanges des autres,
**caractérisé en ce que** chaque équipement de communication (19) comporte de plus :
- des moyens d'analyse spectrale d'un deuxième circuit (CAS) coopérant avec le filtre de bruit (20) pour réaliser un filtrage dynamique pour extraire la parole émise par un utilisateur du bruit ou de l'ambiance sonore,
- et des moyens de synchronisation et de gestion des émissions pour assurer une fonction de maître à l'un des équipements (19) des utilisateurs (A1, A2,.....), les autres devenant esclaves sans hiérarchie dans les échanges.

2. Système autonome de communication audio selon la revendication 1, **caractérisé en ce que** les moyens d'analyse spectrale du deuxième circuit (CAS) comportent un circuit analyseur de fréquence (FFT) en liaison avec un circuit d'extraction (24) des paramètres du filtre de bruits (20) numérique du premier circuit (CTT).

3. Système autonome de communication audio selon la revendication 1, **caractérisé en ce que** le vocodeur (21) en sortie du filtre de bruits (20) numérique est en liaison avec un circuit d'encapsulation (22) pour délivrer après compression et/ou cryptage le signal de sortie (S4) sous forme de trames.

4. Système autonome de communication audio selon la revendication 2, **caractérisé en ce que** le circuit analyseur de fréquence (FFT) est formé par r un analyseur de transformation Fourier.

5. Procédé de communication audio sans fils multi-utilisateurs consistant à équiper chaque utilisateur autonome d'un équipement de transmission numérique (19) à mains libres, **caractérisé par** les étapes suivantes successives :
- analyse spectrale du signal audio numérisé (S3) avec détection de phénomènes vocaux,
- extraction des caractéristiques spectrales du bruit d'ambiance,
- conversion spectrale/temporelle de l'ambiance,
- soustraction temporelle de l'ambiance à l'audio,
- encodage et/ou encryptage du signal audio filtré pour délivrer le signal de sortie (S5) adapté à la transmission.

6. Procédé de communication audio sans fils multi-utilisateurs selon la revendication 5, **caractérisé en ce qu'**on affecte à chaque équipement (19) un premier état d'établissement de communication, dans lequel l'ensemble des équipements des utilisateurs (A1, A2...) ne sont pas synchronisés lors de l'inhibition des communications, et un deuxième état de communication établie, dans lequel un des équipements assure et maintien la synchronisation de tous les autres équipements du système pour autoriser la conférence téléphonique entre les utilisateurs.

7. Procédé de communication audio sans fils multi-utilisateurs selon la revendication 6, **caractérisé en ce** les différents équipements (19) des utilisateurs (A1, A2..) possèdent des protocoles d'échange avec des degrés de priorité différents et décroissants, l'équipement Ai possède une priorité supérieure à l'équipement Ai+n (n≥ 1).
